# EUROPEAN PATENT APPLICATION

(11) **EP 4 079 178 A1**
(43) Date of publication of application: **26.10.2022**
(21) Application number: 21170323.6
(22) Date of filing: 23.04.2021
(51) Int. Cl.: A41D 13/11, A62B 23/02, B01D 39/08, B01D 39/16

(54) **ANTIMICROBIAL AIR FILTER AND FILTER MEDIUM**

(71) Applicant: Albrecht, Hans, 81479 München (DE); Arentz, Jochen, 22301 Hamburg (DE); Von der Heide, Hans-Joachim, 23843 Neritz (DE)
(72) Inventor: The designation of the inventor has not yet been filed
(74) Representative: Habermann, Hruschka & Schnabel

(57) **Abstract**

The present invention relates to antimicrobial air filter comprising a filter medium comprising a composition containing at least one photosensitizer. The invention also relates to face masks comprising an air filter of the invention.

## Description

The present invention relates to antimicrobial air filter comprising a filter medium comprising a composition containing at least one photosensitizer. The invention also relates to face masks comprising an air filter of the invention.

Photosensitizers have been used for photodynamic therapy (PDT) of infections by bacteria and fungi as well as cancer and tumours. Photosensitizers are generally dyes which are transferred to a higher energetically state by absorption of light typically in the visible wavelength range. In the photo-activated state the photosensitizer is able to transfer, as a donor, at least part of the energy to an acceptor molecule. For application in PDT, the energy transfer leads, at least in part, to reactive oxygen species (ROS) such as the superoxide radical which in turn damages various cellular components, especially the cell membrane, of the target cells such as tumour cells, bacteria, or fungal cells, by redox reactions. PDT is mostly applied through local application of the dye and light typically emitted by monochromatic and/or coherent light sources.

There is a growing need in systems for protection of people and locations against colonization by microbial organisms, in particular infective agents such as bacteria, fungi and viruses. This need has grown recently to an enormous extend in view of mankind facing challenges of partially worldwide epidemics such as the recent COVID-19 pandemic, but also other infections like influenza. While conventional air filtering systems are able to retain a certain percentage of microbes, especially in the context of face masks for protecting against infections agents such as viruses, in particular influenza and coronaviruses, especially SARS-CoV-2, their filtering efficiency is often limited in view of the small size of viruses. There have been suggested optimized filtering systems, in particular face masks, for protection against viruses, containing biocidal metallic coatings or particles made of or containing, respectively, silver or copper. However, such metals can have negative consequences for the user's health, especially, when such face masks are used routinely and/or over a prolonged time period, are less cost effective, and/or often have negative ecological implications.

The technical problem underlying the present invention is to provide a novel system for protection of people and locations against microbes. More specifically, the present invention seeks to improve existing antimicrobial air filter systems, especially face masks.

The solution to the above technical problem is provided by the embodiments of the present invention as defined in the claims and described herein as well as shown in the accompanying drawings.

In particular, the present invention provides an antimicrobial air filter comprising a filter medium comprising a composition containing at least one photosensitizer.

The air filter of the invention comprises a filter medium which filters the air. The air filter may be completely constituted of the filter medium but preferably comprises further elements such as means for supporting the filter medium such as a frame wherein the filter medium is mounted or fixed. it is understood according to the invention that said means for supporting the filter medium may support same only partially such as at supporting regions or supporting points, respectively, providing sufficient support for the filter medium such that same is hold in the desired position. The desired or required, respectively, position is preferably such that the filter medium, or at least a part thereof, is arranged in relation to a gaseous stream, preferably an air stream, traveling through at least the part of the filter medium.

For appropriate function, the filter medium is a material which provides for sufficiently allowing flow of the gas, preferably air, through it while providing support for the composition comprising the at least one photosensitizer, and, preferably, is constituted such that microbes and/or aerosols which comprise microbes cannot travel or at least are hindered to a desired extend to travel through the filter medium. For accomplishing that a desired portion of microbes to be hindered to travel though the filter medium and, thus, the air filter, the filter medium is provided at least partially with pores adapted to the size of the aerosol and/or microbes which is/are to be hindered to a desired extend to travel through the filter medium. The pores of the filter medium can also be further adapted so as to filter, at least hinder to travel through the filter medium, other particulate matter, typically contained in aerosols, from the gaseous, preferably, air stream.

According to the invention, an "aerosol" is a heterogenic mixture of solid and/or semisolid and/or liquid particles floating in a gaseous medium, typically and preferably air. The particles in an aerosol in the context of the present invention typically have a diameter of from about 10 nm to about 10 µm, preferably from about 100 nm to 5 µm.

In the context of the invention, it is preferred that the filter medium can filter (i.e., hinder at least a desired extent to travel through the filter medium) droplets, preferably respiratory droplets, i.e. droplets produced by exhalation, preferably by human exhalation, having diameters in the above-referenced ranges, with respiratory droplets having diameters of not more than, preferably less than, about 6 µm, preferably not more than, more preferably less than, about 5 µm being particularly preferred.

In certain embodiments of the invention, the filtration efficiency (% retainment of particles/droplets by the filter medium) of the filter medium for aerosol particles and/or droplets having a diameter at or below about 300 nm, preferably between about 10 nm and about 300 nm, is preferably at least about 50 % or more, more preferably about 60 % or more, even more preferred about 70 % or more, still more preferred about 80 % or more, even more preferred about 90 % or more, most preferred about 95 % or more, preferably at a gas, more preferably air, volume flow rate in the range of from about 1 to about 3 m³/h, more preferred at or around about 2 m³/h.

In other embodiments of the invention, the filtration efficiency (% retainment of particles/droplets by the filter medium) of the filter medium for aerosol particles and/or droplets having a diameter above about 300 nm, preferably more than 300 nm and up to about 10 µm, preferably up to about 6 µm, more preferably up to about 5 µm, is preferably at least about 50 % or more, more preferably about 60 % or more, even more preferred about 70 % or more, still more preferred about 80 % or more, even more preferred about 90 % or more, most preferred about 95 % or more, preferably at a, gas, more preferably air, volume flow rate in the range of from about 1 to about 3 m³/h, more preferred at or around about 2 m³/h.

In certain embodiments of the invention, the filter medium, preferably at a gas, more preferably air, volume flow rate in the range of from about 1 to about 3 m³/h, more preferred at or around about 2 m³/h, has a combined filter efficiency of at least about 50 % for aerosol particles and/or droplets having a diameter at or below about 300 nm, preferably between about 10 nm and about 300 nm, and at least about 60 % for aerosol particles and/or droplets having a diameter above about 300 nm, preferably more than 300 nm and up to about 10 µm, preferably up to about 6 µm, more preferably up to about 5 µm.

In certain embodiments of the invention, the filter medium, preferably at a gas, more preferably air, volume flow rate in the range of from about 1 to about 3 m³/h, more preferred at or around about 2 m³/h, has a combined filter efficiency of at least about 60 % for aerosol particles and/or droplets having a diameter at or below about 300 nm, preferably between about 10 nm and about 300 nm, and at least about 70 % for aerosol particles and/or droplets having a diameter above about 300 nm, preferably more than 300 nm and up to about 10 µm, preferably up to about 6 µm, more preferably up to about 5 µm.

In certain embodiments of the invention, the filter medium, preferably at a gas, more preferably air, volume flow rate in the range of from about 1 to about 3 m³/h, more preferred at or around about 2 m³/h, has a combined filter efficiency of at least about 70 % for aerosol particles and/or droplets having a diameter at or below about 300 nm, preferably between about 10 nm and about 300 nm, and at least about 80 % for aerosol particles and/or droplets having a diameter above about 300 nm, preferably more than 300 nm and up to about 10 µm, preferably up to about 6 µm, more preferably up to about 5 µm.

In certain embodiments of the invention, the filter medium, preferably at a gas, more preferably air, volume flow rate in the range of from about 1 to about 3 m³/h, more preferred at or around about 2 m³/h, has a combined filter efficiency of at least about 80 % for aerosol particles and/or droplets having a diameter at or below about 300 nm, preferably between about 10 nm and about 300 nm, and at least about 90 % for aerosol particles and/or droplets having a diameter above about 300 nm, preferably more than 300 nm and up to about 10 µm, preferably up to about 6 µm, more preferably up to about 5 µm.

While pore size or mesh size, respectively, (i.e., filtration by mechanic means) is one of the means by which the filter medium retains particles and/or droplets, in particular aerosol particles and/or droplets, there are also other aspects or characteristics of the filter medium that add to particle/droplet retainment abilities of the filter medium. One characteristic typically providing additional filter efficiency to the filter medium, is electrostatic attraction of particles/droplets by the filter medium. According to preferred embodiments of the invention, the filter medium employs mechanic and electrostatic filtering characteristics.

The material of the filter medium, besides the composition comprising the at least one photosensitizer, is overall not critically, provided that it provides the desired filtering characteristics, as exemplified herein, in particular for preferred embodiments set out before and further outlined in this description. Preferred materials in the context of the invention, in particular for applications of the inventive filter medium and air filter, are woven and non-woven fabrics as well as combinations thereof. The filter medium can consist of one or more layers of such fabrics. Preferred fabrics for the filter medium are, but not limited to, cotton, flannel, chiffon, silk, and synthetic fabrics, e.g. polyester, polyamide, polyethylene, polypropylene, ethylene vinyl acetate (EVA) polymers, polycarbonate, polystyrene, mixed synthetic fabrics of two or more of such polymers etc., as well as combinations of two or more thereof. For obtaining mechanic and electrostatic filter capabilities it is preferred that the filter medium comprises, for example as at least one layer of the filter medium, silk and/or one or more synthetic fabric(s). In a preferred embodiment, the filter medium is made of more than one layer and one layer thereof comprises the photosensitizer composition as outlined herein, preferably a composition comprising at least one phenothazine derivative as further defined below. In preferred embodiments, the filter medium comprises one layer, preferably an outer layer, comprising the photosensitizer composition and another layer providing the filter characteristics of the filter medium.

Microbes in the sense of the invention to which the embodiments of the invention are directed are all biological systems which can travel in a gaseous, preferably air, stream. Preferred microbes are typically bacteria, fungi, preferably their spores, and viruses and viroids, but also include protozoans.

In preferred embodiments, the composition containing the at least one photosensitizer is coated onto at least one part or region of said filter medium. In other embodiments, the filter medium is impregnated with the composition at least on one part or region of the filter medium. It is also possible to provide the filter medium, at least on one or more parts or regions thereof, with a coating comprising the at least one photosensitizer and to impregnate the filter medium, or at least one or more parts or regions thereof, with the photosensitizer, wherein said at least one or more parts or regions where the filter medium is coated or impregnated, respectively, with the photosensitizer composition may be the same or different. For coating or impregnation of the filter medium, or one or more parts or regions thereof, the filter medium can be soaked with the photosensitizer composition. In other embodiments the composition may be applied by pouring or dripping of the photosensitizer composition onto the complete filter medium or onto one or more parts or regions of it.

Preferably, the photosensitizer is a photoactivatable phenothiazine, more preferably a photoactivatable phenothiazine dye.

Especially preferred photosensitizers for use in the invention are phenothiazine derivatives having a structure of the following formula (I) 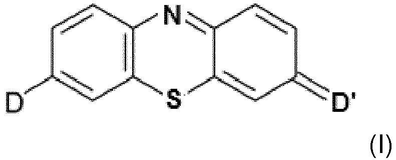 wherein
D and D' each are an electron donor group, and wherein the positions C-1, C-2, C-4, C-6, C-8 and/or C-9 of the phenothiazine ring system may be substituted by a substituent preferably selected from substituted or unsubstituted lower alkyl, preferably C₁₋₃-alkyl, particularly preferred methyl, or lower alkenyl, preferably C₂₋₃-alkenyl, amino, halo, and cyano. Preferably, D and D' are each independently a NRR' group with R and R' being preferably independently selected from H, substituted or unsubstituted lower alkyl, preferably C₁₋₃-alkyl, particularly preferred methyl, and lower alkenyl, preferably C₂₋₃-alkenyl.

Particularly preferred phenothiazines for use in the present are methylene blue, new methylene blue, toluidine blue and mixtures thereof, with methylene blue being most preferred.

In preferred embodiments of the invention the composition contains 0.001 (v/v) to 1 % (v/v), preferably from 0.005 % (v/v) to 0.5 % (v/v), of one or more photoactivatable phenothiazine derivatives wherein the afore-mentioned concentration ranges relate preferably to the overall photothiazine derivative(s) contained in the composition. In other embodiments where the composition contains more than one phothiazine derivative, the above-mentioned concentrations ranges may relate to the concentration of each single photothiazine derivative present in the composition whereby the concentration of the photothiazine dyes may be the same or different.

The composition containing at least one photosensitizer such as a photoactivatable phenothiazine for use in the invention further typically comprises at least one diluent. Preferred diluents for use in the invention are typically water, preferably sterilized water, more preferably sterilized distilled water, or aqueous solutions such saline or buffered saline solutions such as PBS, whereby it is understood that such diluents and are preferably sterilized.

While the invention generally applies to air filters comprising the filter medium as described herein, it is understood that the present invention is also directed to the filter medium as such.

As mentioned above, the photosensitizer needs to be activated in order to exert its function of at least damaging or, optimally, eliminating microbes trapped on or in, respectively, the filter medium or air filter, respectively, of the invention.

It has been *inter alia* surprisingly discovered according to the invention that photosensitizers of the invention, in particular photoactivatable phenothiazine derivatives, preferably those described above, can be activated by ambient light such that further irradiation of the filter medium or air filter, respectively, of the invention by an external (non-natural) light source is not required for sufficient activation of the photosensitizer so as to damage or eliminate microbes trapped on or in, respectively, the filter medium or air filter, respectively, of the invention.

According to the invention the term "ambient light" refers to sunlight, in particular daylight, and/or light of conventional indoor and/or light sources such as lamps including fluorescent lamps, double-end tubular lamps, light-emitting diode (LED) lamps, light-emitting electrochemical cells, magnetic induction lamps, conventional light bulbs etc.

In other embodiments of the invention, however, it is desired, for example, if the air filter is used in an environment where sunlight is absent or only an insufficient amount and/or intensity of sunlight is present, respectively, or for even more effective damaging or elimination of microbes trapped in or on, respectively, the filter medium or air filter, respectively, to irradiate at least one part or region, respectively, of the filter medium or air filter, respectively, using a suitable light source emitting light of a suitable frequency for the desired photosensitizer and application. In particular, when the filter medium or air filter, respectively, of the invention is used in air conditioning systems such as those as mentioned herein, preferred light sources are gas-discharge lamps such as preferably sodium-vapor lamps such as high pressure or low pressure sodium-vapor lamps, the latter being particularly preferred, especially if such gas-discharge lamps, are used for activating phenothiazine photosensitizers as disclosed herein.

The light for irradiating at least a part of the filter medium or air filter, respectively, has a wavelength, or at least comprises a wavelength, and typically also an intensity, preferably in terms of energy density, i.e. applied energy per surface area, causing the photosensitizer to be transferred to an active state as outlined above.

The light source used for irradiation according to the invention, which, according to the invention, may refer to light emitting element of a corresponding device or the device *per se,* is preferably a device comprising a light emitting diode (LED). In embodiments of the invention the light source emits coherent light, in which case the light source is a laser device emitting light of a specific wavelength. The laser device can be an LED laser device. In other preferred embodiments, the light source or light emitting device, respectively, can be a light source or device, respectively, emitting non-coherent light, preferably an LED device It is a further surprising finding according to the invention that it is sufficient for attaining substantial and strong virus inhibition to use a broadband light source, more preferably a broadband LED device. In preferred embodiments of broadband LED devices, the LED light source is doted with Cer which shifts the potential dominant blue part (shorter wavelength) of the emitted light to longer wavelengths. In other preferred embodiments the LED devices can be one emitting non-coherent monochromatic light, preferably having a wavelength as further described below.

As already noted above, the wavelength or wavelength spectrum of the light emitted by the light source depends on the particular photosensitizer. Preferred phenothiazine photosensitizers for use in the invention typically absorb light in the visible to near infrared light of the electromagnetic wave spectrum. For example, in the visible spectrum, methylene blue absorbs light in the wavelength region of from about 530 nm to about 700 nm, new methylene absorbs light in the wavelength region of from about 500 nm to about 700 nm, and toluidine blue absorbs light in the region of from about 520 nm to about 700 nm. In preferred embodiments, the photosensitizer is typically activated by irradiation with light have a wavelength of wavelengths, respectively, in the range of from about 500 nm to about 820 nm. As already indicated above, the light source or light emitting device, respectively, for use in the invention emits light typically within this wavelength region, whereby the light source can emit light in broadband region, preferably, of the above indicated visible to near infrared spectrum, preferably of about 500 nm to about 820 nm. Particularly preferred, the wavelength used for activating the photosensitizer, preferably one or more of the above-described phenothiazines, preferably, methylene blue and/or new methylene blue and/or toluidine blue, most preferred methylene blue, is at or around 590 nm such as from about 550 nm to about 630 nm, preferably about 570 to about 610 nm, more preferably about 585 nm to about 595 nm, most preferred 590 nm.

In other preferred embodiments of the invention, the invention makes use of the light absorption of phenothiazine photosensitizers as outlined herein in the near infrared region. In certain embodiments of this type, the photosensitizer-activating light is in the near infrared region of the electromagnetic spectrum, preferably from about 780 nm to about 810 nm, more preferably around or at 800 nm such as from about 790 nm to about 810 nm, most preferred 810 nm. Near infrared light has the advantage that it is absorbed to a lesser extent by many materials so that it can reach into deeper into the irradiated regions as defined above. The fact of the wavelength dependency of light scattering which is higher for longer wavelengths further contributes to this effect, and at wavelengths of at or around 810 nm the scattering coefficient is higher than the absorption coefficient, and furthermore the scattering is a forward scattering further contributing to the higher depth of penetration. It is to be understood according to the invention that the use of light of longer wavelength, in particular light having wavelength of ca. 670 nm or more, in particular light in the near infrared region as outlined above, for activating the photosensitizer should be of sufficient intensity. In such embodiments of the invention, it is preferred that the light emitting source emits coherent light, and corresponding laser devices are especially preferred.

In preferred embodiments of the invention the at least part of the air filter or filter medium, respectively, is irradiated with an energy density of 50 to 150 J/cm², preferably 80 to 120 J/cm,' more preferably 90 to 110 J/cm, most preferably 100 J/cm². Preferred emitted light intensities, especially in the case of irradiation with non-coherent light, preferably by LED devices, such as broadband LED devices or LED devices emitting light at about or around about 590 nm (as outlined above) range from about 6000 Lux to about 90000 Lux, preferably from about 10000 Lux to about 70000 Lux, most preferred from about 40000 Lux to about 60000 Lux, such as, particularly preferred about 50000 Lux.

The filter medium and air filter of the invention have multiple applications. For example, the embodiments of the invention can be used in all settings where air filter and filter media, respectively, are used to hinder microbes to enter or flow through, respectively, a selected location. Thus, the air filter of the invention can be used in air conditioning systems in hospitals (e.g. in emergency rooms, operation rooms or operation tracts), laboratories, laboratory equipment such as hoods, factories, air crafts (in particular air conditioning systems of the air craft cabin), etc. where contamination of rooms or parts thereof as well as equipment as well as parts of equipment shall be avoided or at least minimized. In preferred embodiments of the invention, particularly systems employing a filter medium and air filter, respectively, of the invention, in particular air conditioning systems, such as preferably air conditioning system applications as outlined above, the device or system comprising the filter medium or air filter, respectively, comprise means for providing at least the filter medium or at least a layer of the filter medium comprising the photosensitizer or photosensitizer composition, respectively, a humidity and/or maintaining humidity of the at least the filter medium or at least a layer of the filter medium comprising the photosensitizer or photosensitizer composition, respectively. Preferred examples of the humidification medium or wetting agent, respectively, are water and aqueous solutions, e.g. PBS, more preferred deionized water or distilled water. The wetting agents are preferably sterilized. In further preferred embodiments, the means for applying the wetting agent are sprinklers, tubes or other known elements for providing surfaces, in particular filter media, with liquids.

One preferred application of the air filter or filter medium, respectively, according to the invention is its inclusion in face masks, in particular protection masks and medical masks.

Therefore, the present invention further provides a face mask comprising an air filter (or at least a filter medium) of the invention.

In addition to the air filter or filter medium, respectively, of the invention, the face mask comprises otherwise conventional components as known in the art of face masks, in particular protective masks and medical masks. The face mask may be a full face mask or a half face mask. Preferred embodiments of the invention are half face masks comprising means such as ear loops and/or head ties and/or elastic straps, for removably holding the mask in the desired position such that it covers at least the mouth and nose of the user. In preferred embodiments of the invention, in particular for medical face mask applications, half face masks according to the invention contains pleats for facilitating the coverage of the user's face from nose to chin. Preferably such masks comprise 2 to 5, most preferred 3 pleats. It is further preferred that face masks according to the invention, in particular half face masks, further comprise means for improving tight between the rim portions of the mask with the user's dermis such as flexible liners and and nose strips or clips which are preferably made of bendable material such as metal or plastic, and more preferably integrated within a layer of the face mask.

The air filter or filter medium is preferably at least contained in a part of the mask covering the nose and mouth of a user.

In preferred embodiments the face mask of the present invention comprises multiple layers of woven and/or non-woven fabric. Preferred face masks of the invention comprise a combination of multiple layers of non-woven and woven fabric. In one preferred embodiment, the face mask comprises three layers, with the inner and outer layers made or comprising non-woven fabric, and a medium textile layer, preferably a synthetic textile, more preferably containing or consisting of polypropylene, polystyrene, polycarbonate, polyester or mixtures of two or more of such polymers (further examples have already been mentioned above). Preferably, the air filter or filter medium, respectively, of the invention is or is contained in, respectively, one of said multiple layers, more preferably the air filter or filter medium, respectively, is or is contained in the outer layer. It is further preferred that the outer layer containing or being the air filter or filter medium is removable. In further preferred embodiments of the invention the face mask comprises ventilation holes which contain the air filter or filter medium, respectively, of the invention.

In certain preferred embodiments of the invention, the face mask comprises an outer layer comprising the photosensitizer composition as defined and described herein, and one or more further layers, wherein at least one of said one or more further layers provide the filter characteristics of the face mask. Preferably, the outer layer of the face mask comprising the photosensitizer or composition containing at least one photosensitizer, preferably at least one phenothiazine derivative as disclosed herein, is a non-woven fabric. In preferred embodiments, the outer layer (hereinafter also referred to the "photosensitizier layer") replaces the outer layer of an otherwise conventional face mask, i.e. the outer layer is a fixed layer of the face mask. The outer layer may also be removably attached from the other layer(s) of the face mask (the face mask without the photosensitizer layer is also referred to as a "basic face mask"). In preferred embodiments of the invention the outer layer may be removably attached to the basic by appropriate fixation means such as velcro. In other embodiments of the invention, the photosensitizer layer may be in the form of an element which is fixed to the users face through independent fixation means such ear loops and/or head ties and/or elastic straps.

Preferably, the face mask of the invention complies with known standards for protective and/or medical face masks such as FFF1, FFP2 or FFP3, more preferably FFP2 or FFP3, most preferred FFP2, according to EU Norm 149:2001 +A1:2009 and/or Class I, II or IIR according to EU Norm 14683 and/or N95, N99 or N100 according to U.S. Title 42 CFR Part 84 and/or Class 1, 2 or 3 of U.S. Norm ASTM F2100 and/or Type KN90, KN95 or KN100 of Chinese Regulation GB 2625-2006 and/or Type KN90, KN95 or KN100 of Chinese Norm GB 2625-2006 and/or Type 1, 2 or 3 of Chinese Norm GB 18083-2010 and/or standard Class I, II or III of Chinese Norm GB 32610-2016 and/or Japanese standard DS2 and/or KF80, KF94 or KF100 according to the Korean Food and Drug Administration.

In preferred embodiments, the face mask of the invention is a disposable face mask, more preferably adapted to single use. Further preferred embodiments of the inventive face masks are sterilized face masks.

Further subject matter of the invention is a kit comprising a basic face mask and at least one air filter or filter medium of the invention wherein the air filter or filter medium, respectively, is removably attachable to the basic face mask.

The kit may contain one more basic face masks and one or more inventive air filters or filter media, respectively, preferably one basic face mask and one or more air filters or filter media, respectively, such as 2 to 10 air filters or filter media, respectively. In preferred embodiments of the inventive kit the air filter forms an outer layer covering at least the mouth and/or nose regions when attached to the basic face mask.

The Figures show:

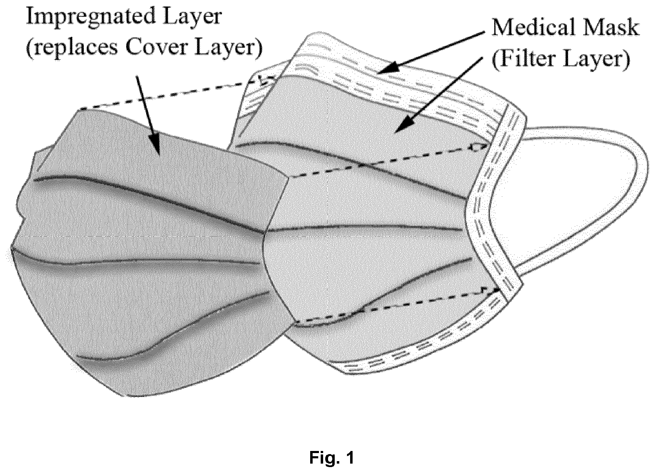

Fig. 1 shows an embodiment of a face mask of the invention comprising a medical mask wherein the outer layer of a conventional medical mask is replaced by a layer impregnated with a photosensitizer composition as disclosed herein.

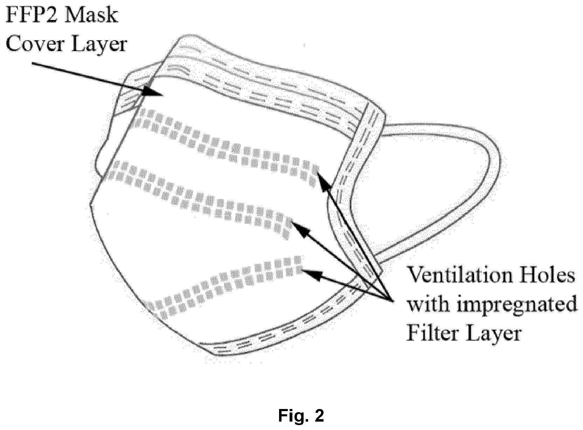

Fig. 2 shows an embodiment of a face mask of the invention being in the form of an FFP2 mark which comprises ventilation holes comprising a filter layer impregnated with a photosensitizer composition as disclosed herein.

The present invention is further illustrated by the following non-limiting example:

### EXAMPLE

### Ambient light is sufficient for controlling SARS-Cov-2 virus using phenothiazine photosensitizer

### Virus and cells

The SARS-CoV-2/Germany strain was derived from a patient isolate.
The Vero E6 cells were obtained from University Bern, Switzerland.
The cells were inspected regularly for morphological alterations and for contamination by mycoplasmas. No morphological alterations of cells and no contamination by mycoplasmas could be detected.

### Time schedule

Preparation of testing: 14/12/2020 - 23/12/2020
Test period: 25/01/2020 - 22/02/2021
Preparation of report: 22/03/2021 - 24/03/2021
Signature of final report: 24/03/2021

### 2 Material

### Culture medium and reagents

- Dulbecco's Modified Eagle Medium (DMEM, Thermo Fisher, catalogue no. 11965092)
- Fetal Bovine Serum (FBS, Thermo Fisher, article no. 10270106)
- Penicillin-Streptomycin (P/S, Thermo Fisher, catalogue no. 15140122)
- Non-Essential Amino Acids Solution (100X) (NEAAs, Thermo Fisher, catalogue no. 11140035)
- L-Glutamine (200 mM) (L-Glut, Thermo Fisher, catalogue no. 25030024)
- Trypsin-EDTA (0.5 %), no phenol red (Thermo Fisher, catalogue no. 15400054
- BSA (Sigma-Aldrich-Chemie GmbH, article no. CA-2153)
- sheep erythrocytes (Fiebig Nährstofftechnik)
- Crystal Violet (Sigma-Aldrich-Chemie GmbH, article no. C0775)

### Apparatus, glassware and small items of equipment

- CO2 incubator
- Agitator (Vortex Genie Mixer)
- Microscope, inverse
- Centrifuge, water bath
- Adjustable and fixed-volume pipettes
- 24-well plates and 96-well microtitre plates
- Cell culture flasks and sealed reaction test tubes.

### Methods

To analyse the efficacy of the photosensitizer activation to inactivate the humane coronavirus, Vero E6 cells were cultivated in 24-well plates and infected with SARS-CoV-2 before irradiation treatment. The following short flowchart provides an overview
of the process:

### (Sub)culturing of Vero cells in 24-well plates:

1 x 105 cells/well - 1 mL medium/well - 1 well/plate

### (Day 1)

### Infection of the Vero cells with SARS-CoV-2 (MOI 3):

500 µL virus suspension/well for 1 hour - wash with PBS (1 x) - add 1 mL medium/well

### (Day 2)

### Pre-treatment/irradiation of the SARS-CoV-2-infected cells:

Pretreatment with 0.001 % or 0.0001 % Sensitizer and irradiation for 1, 2 and 3 minutes (immediately after treatment: plates were wrapped in aluminium foil) Harvest: Remove supernatant, wash 1 x with PBS, add 500 µL PBS and freeze

### (Day 3)

Virus recovery (3 x freeze/thaw procedure) and virus titration

### Preparation of test virus suspension

For virus production, 2 x106 Vero E6 cells were cultivated in a 75 cm2 flask in DMEM supplemented with 1 % L-Glut, NEAAs, and P/S and 10 % FBS. One day after seeding, medium was changed to 10 mL fresh DMEM inoculated with 100 µl of SARSCoV-2/Germany virus suspension. The supernatant was harvested after 3 days at 37 °C by centrifugation at 1,500 rpm for 5 min to remove cell debris. The supernatant was aliquoted and stored at -80 °C. Viral titres were determined by plaque assay and endpoint dilution.

### Preparation of Vero cells for irradiation treatment

Vero E6 cells of a cell culture flask were detached enzymatically with Trypsin-EDTA solution. 1 x 105 cells were transferred into one well (B3) of a 24-well plate with a final volume of 1,000 µl cell culture medium. After one day of cultivation at 37 °C and 5 % CO2, medium was removed from the individual wells and cells were infected with SARS-CoV-2 (500 µL virus suspension per well 2 x 200 µl per well; MOI 3). After 1 h of incubation at 37 °C, inoculum was removed, cells were washed once with PBS and cultivated in 1 mL culture medium for further 20 to 24 h at 37 °C and 5 % CO2. After that, SARS-CoV-2-infected cells were used for irradiation treatment.

### Preparation of sensitizer

The following methylene blue solution was prepared using a stock solution containing 1.07 % (w/v):
0.01 (w/v) (end concentration in 1,000 µl /well)

The 0.001 % (w/v methylene blue concentration was prepared by adding 1 µl of the stock solution to 1000 µl medium per well.

### Irradiation procedure

For photodynamic inactivation of the human coronavirus (SARS-CoV-2), first the appropriately diluted methylene blue solution (1 µl per well) was added to the SARS-CoV-2-infected cells. Immediately thereafter, irradiation with day light (ca. 15500 Ix) was performed The single well of each plate was treated separately.

The following Table 1 summarized the selected conditions during the respective photodynamic treatment of the SARS-CoV-2- infected cells:

**Tab. 1: Photosensitizer and irradiation condition for treatment samples and controls**

| **SARS-CoV-2 infected Vero E6 cells** | **Conc. of sensitizer in 1000 µl/well [% (w/v)]** | **Irradiation time with ambientlight* and about 1,500 Ix [min]** |
|---|---|---|
| **untreated (virus control)** | - | - |
| **Treated (Tox 1)** | 0.001 | - |
| **treated** | 0.001 | 1 |
| **Treated** | 0.001 | 2 |
| **treated** | 0.001 | 3 |

| | | |
|---|---|---|
| * ambient light = light of the clean bench (MaxiSafe 2030, ThermoFisher Scientific => ∼ 1,500 Ix) | | |

After treatment, the entire plate was immediately wrapped with aluminium foil for maximum 1 min. Afterwards supernatant
was removed, cells were washed once with 1,000 µL PBS, overlaid with 500 µL PBS and stored at -80 °C.

### Recovery of the residual virus and determination of infectivity

For recovery of residual virus from the infected and treated cells, plates were subjected to three freeze/thawing procedures. This was followed by mixing of cell suspension in each well by pipetting up and down 15 times to re-suspend the virus. After that, 22 µl of the virus-disinfectant solution was immediately added to the first row of Vero E6 cells (seeded at 1 x 104 cells/well in a 96 well plate one day prior the examination), followed by a serial endpoint dilution titration. After 3 days of incubation at 37 °C in a CO2-atmosphere (5.0 % CO2-content) cultures were observed for cytopathic effects by crystal violet staining. The infectious dose (log10 TCID50/ml) was calculated according to the method of Spearman (1) and Kärber (2).

### Controls

### (a) Virus control (VC)

Virus recovery was performed from non-treated SARS-CoV-2-infected Vero E6 cells (no sensitizer and no irradiation) as described above. The mean virus titre was used as reference for calculation of the reduction factor (RF).

### (b) Treatment with methylene blue solution without irradiation

Another virus recovery was performed from infected Vero E6 cells, treated with the indicated methylene blue solution for 3 min in darkness. After treatment, culture plate was wrapped up with aluminum (without exposure to light), stored for a maximum of 1 min in the dark before harvest (remove supernatant, washing with PBS (1 x), adding 500 µL PBS and frozen until virus recovery and titration of the residual virus) was performed as described above.

### c) Cell culture control

Furthermore, a cell control (only addition of medium) was incorporated.

### Calculation of effectiveness

The virucidal effectiveness of the methylene blue treatment and the photodynamic inactivation properties with ambient light was evaluated by calculating the decrease in titre of the treated and radiated culture in comparison with the control titration of the approaches without treatment (VC). The difference is given as reduction factor (RF).

### Results

The effectiveness of the photodynamic treatment was determined after the irradiation treatment of SARS-CoV-2-infected Vero E6 cells (only one well of a 24-well plate per concentration of the sensitizer and irradiation condition), respectively. Results of examination are shown in the following Table 2.

**Tab 2.: Effectiveness of photodynamic treatment of SARS-Cov-2-infected Vero cells**

| **Treatment** | **Irradtion (Lux)** | **Time (min)** | **TCID50/ml** | **log10 TCID50** | **RF** |
|---|---|---|---|---|---|
| 0,001% (w/v) methylene blue | ca. 1.500 | 1 | ≤3.41 E+02 | ≤2.53 | ≥1.50 |
| 0,001% (w/v) methylene blue | ca. 1.500 | 2 | ≤1.58E+02 | ≤2.20 | ≥1.83 |
| 0,001% (w/v) methylene blue | ca. 1.500 | 3 | ≤1.58E+02 | ≤2.20 | ≥1.83 |
| **0,001% (Tox 1)** | | | 1.58E+02 | ≤2.20 | ≥4.67 |
| **mock treated (VC)** | | | 7,34E+06 | 6.87 | n.a. |
| **mock infected (cell control)** | | | 1,58E+02 | 2.20 | n.a. |
| **mock treated (VC)** | | | 1.08E+04 | 4.03 | n.a. |

Using the irradiation with ambient light having an intensity of about 1,500 Ix instead of the flashlight LED and 0.001 % (w/v) methylene blue, only a small amount of residual virus could be detected after 1 minute and no residual virus was found after 2 and 3 minutes of incubation. The comparatively low maximal RF of 1,83 was found due to the quite low initial virus titre of 4.03 log10 TCID50/ml in the test

### Conclusion

A surprisingly high reduction in virus titer was obtained using 0.001 % (w/v) of the sensitizer and ambient light after an incubation time of only 2 min.

### References

(1) Spearman, C.: The method of 'right or wrong cases' (constant stimuli) without Gauss's formulae. Brit J Psychol; 2 1908, 227-242
(2) Kärber, G.: Beitrag zur kollektiven Behandlung pharmakologischer Reihenversuche. Arch Exp Path Pharmak; 162, 1931, 480-487

## Claims

1. Antimicrobial filter medium comprising a composition containing at least one photosensitizer.

2. The filter medium of claim 1 wherein the composition is coated onto at least a region of said filter medium.

3. The filter medium of claim 1 wherein the filter medium is impregnated with the composition at least on a region of the filter media.

4. The filter medium according to any one of the preceding claims wherein the photosensitizer is a photoactivatable phenothiazine.

5. The filter medium of claim 4 wherein the phenothiazine photosensitizer is a photoactivatable phenothiazine dye.

6. The filter medium of claim 4 or 5 wherein the photosensitizer is a phenothiazine derivative having a structure of the following formula (I) 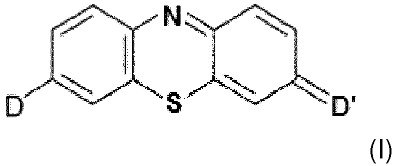 wherein
D and D' each are an electron donor group, and wherein the positions C-1, C-2, C-4, C-6, C-8 and/or C-9 of the phenothiazine ring system may be substituted by a substituent preferably selected from substituted or unsubstituted lower alkyl, preferably C₁₋₃-alkyl, particularly preferred methyl, or lower alkenyl, preferably C₂₋₃-alkenyl, amino, halo, and cyano. Preferably, D and D' are each independently a NRR' group with R and R' being preferably independently selected from H, substituted or unsubstituted lower alkyl, preferably C₁₋₃-alkyl, particularly preferred methyl, and lower alkenyl, preferably C₂₋₃-alkenyl.

7. The filter medium of claim 6 wherein the phenothiazine dye is selected from the group consisting of methylene blue, new methylene blue, toluidine blue and mixtures thereof.

8. The filter medium of claim 7 wherein the phenothiazine dye is methylene blue.

9. The filter medium according to any one of claims 6 to 8 wherein the composition contains 0.001 (v/v) to 1 % (v/v), preferably from 0.005 % (v/v) to 0.5 % (v/v), of said photoactivatable phenothiazine derivative.

10. The filter medium according to any one of the preceding claims wherein at least a part of the filter medium is impregnated with the composition containing at least one photosensitizer.

11. The filter medium according to any one of the preceding claims wherein the filter medium is a woven or non-woven fabric.

12. An air filter comprising a filter medium according to any one of the preceding claims.

13. A face mask comprising an air filter of claim 12.

14. The face mask of claim 13 the air filter is at least contained in one or more parts of the mask covering the nose and/or mouth of a user.

15. The face mask of claim 13 or 14 wherein the face mask comprises multiple layers of fabric.

16. The face mask of claim 15 wherein the air filter is or is contained in, respectively, one of said multiple layers.

17. The face mask of claim 16 wherein the air filter is or is contained in the outer layer.

18. The face mask of claim 17 wherein the outer layer is removably attached to the face mask.

19. The face mask according to any one of claims 13 to 18 wherein the face mask comprises ventilation holes which contain the air filter of claim 12.

20. The face mask according to any one of claims 13 to 19 complying with a standard selected from the group consisting of FFF1, FFP2 and FFP3 according to EU Norm 149:2001+A1:2009.

21. The face mask of claim 20 complying with standard FFP2 according to EU Norm 149:2001+A1:2009.

22. The face mask according to any one of claims 13 to 19 complying with a standard selected from Classes I, II and IIR according to EU Norm 14683.

23. The face mask according to any one of claims 13 to 19 complying with a standard selected from N95, N99 and N100 according to U.S. Title 42 CFR Part 84.

24. The face mask according to any one of claims 13 to 19 complying with a standard selected from the group consisting of Classes 1, 2 and 3 of U.S. Norm ASTM F2100.

25. The face mask according to any one of claims 13 to 19 complying with a standard selected from the group consisting of Types KN90, KN95 and KN100 of Chinese Regulation GB 2625-2006.

26. The face mask according to any one of claims 13 to 19 complying with a standard selected from the group consisting of Types KN90, KN95 and KN100 of Chinese Norm GB 2625-2006.

27. The face mask according to any one of claims 13 to 19 complying with a standard selected from the group consisting of Types 1, 2 and 3 of Chinese Norm GB 18083-2010.

28. The face mask according to any one of claims 13 to 19 complying with standard DS2selected from the group consisting of Classes I, II, and III of Chinese Norm GB 32610-2016.

29. The face mask according to any one of claims 13 to 19 complying with Japanese standard DS2.

30. The face mask according to any one of claims 13 to 19 complying with standard DS2selected from the group consisting of KF80, KF94 and KF100 according to the Korean Food and Drug Administration.

31. A kit comprising a basic face mask and at least one air filter of claim 12 wherein the air filter is removably attachable to the basic face mask.

32. The kit of claim 31 wherein the air filter forms an outer layer covering at least the mouth and/or nose regions when attached to the basic face mask.
